# EUROPÄISCHE PATENTSCHRIFT

(11) **EP 1 314 279 B1**
(45) Veröffentlichungstag und Bekanntmachung des Hinweises auf die Patenterteilung: **12.01.2005**
(21) Anmeldenummer: 01974204.8
(22) Anmeldetag: 21.08.2001
(51) Int. Cl.: H04L 12/24, H04Q 7/34

(54) **SYSTEM ZUM BETRIEB, INSBESONDERE ZUR FERNBEDIENUNG UND FERNÜBERWACHUNG VON UNBEMANNTEN FUNKSENDERN**
SYSTEM FOR OPERATING, ESPECIALLY FOR REMOTE CONTROLLING AND TELEMONITORING, UNMANNED RADIO TRANSMITTERS
SYSTEME SERVANT A FAIRE FONCTIONNER, NOTAMMENT A COMMANDER A DISTANCE ET A SURVEILLER A DISTANCE, DES EMETTEURS RADIO COMPLETEMENT AUTOMATIQUES

(30) Priorität: 31.08.2000 DE 10042934
(43) Veröffentlichungstag der Anmeldung: 28.05.2003
(73) Patentinhaber: Rohde & Schwarz GmbH & Co. KG, 81671 München (DE)
(72) Erfinder: REITMEIER, Manfred, 84036 Landshut (DE); SAMMER, Hermann, 94078 Freyung (DE)
(74) Vertreter: Körfer, Thomas, Dipl.-Phys.
(86) Internationale Anmeldenummer: PCT/EP2001/009671
(87) Internationale Veröffentlichungsnummer: WO 2002/019629

(56) Entgegenhaltungen:
- EP-A- 0 851 695
- EP-A- 0 928 121
- WO-A-99/43174
- DE-C- 19 904 331
- US-A- 5 961 594
- PARK K S ET AL: "PERFORMANCE ANALYSIS OF THE NETWORK MANAGEMENT PROTOCOL IN THE CDMAPCS NETWORK" IEEE GLOBAL TELECOMMUNICATIONS CONFERENCE. PHOENIX, ARIZONA, NOV. 3 - 8, 1997, GLOBAL TELECOMMUNICATIONS CONFERENCE (GLOBECOM), NEW YORK, IEEE, US, Bd. 1, 3. November 1997 (1997-11-03), Seiten 185-190, XP000737532 ISBN: 0-7803-4199-6

## Beschreibung

Die Erfindung betrifft ein System laut Oberbegriff des Hauptanspruches.

Es ist bekannt, Rundfunksendestationen unbemannt, d.h. ohne Bedienungspersonal am Aufstellungsort des Senders zu betreiben und im Sender eine Fernsteuereinrichtung vorzusehen, die ständig den Betrieb des Senders überwacht und bei Bedarf von einer Zentrale aus ferngesteuert werden kann. Mit einem solchen bekannten System kann eine große Anzahl von Funksendern zentral bedient, ferngesteuert und gewartet werden (nach DIN IEC 864, Februar 1989 "Zusammenschaltung von Rundfunksendern oder Sendersystemen mit Fernwirkeinrichtungen", S. 4). Die einzelnen Funksender sind dabei meist über Standleitungen mit der Zentrale verbunden. Diese bekannten Systeme sind relativ aufwendig und teuer.

Es ist daher Aufgabe der Erfindung, ein solches System zum Betrieb von unbemannten Funksendern zu schaffen, das wesentlich einfacher ist und aufwendige Spezialverbindungen zwischen den Sendern und der Zentrale überflüssig macht.

Dokument DE 199 04 331 offenbart ein System zum Bedienen und Beobachten eines Automatisierungssystems bei dem zwischen einem Clienten und einem Server eine bidirektionale Internet-Verbindung, jeweils in gleicher Richtung, aufgebaut wird.

Diese Aufgabe wird ausgehend von einem System laut Oberbegriff des Hauptanspruches durch dessen kennzeichnende Merkmale gelöst. Vorteilhafte Weiterbildungen insbesondere bezüglich der Ausbildung der Rückmelde-Netzverbindung ergeben sich aus den Unteransprüchen.

Gemäß der Erfindung wird für die Verbindung zwischen den einzelnen Sendern und der Zentrale ein öffentliches oder privates Netzwerk, beispielsweise ein sogenanntes Local Area Network (LAN) oder Wide Area Network (WAN) benutzt, wie sie zwischenzeitlich weltweit in verschiedenartigsten Ausführungsformen zur Verfügung stehen. Zur Abfrage der Betriebsfunktionen des Senders ist in der Zentrale nur noch ein üblicher Internet-Browser und in den Sendern ein zugehöriger Server erforderlich, um nach dem HTTP (Hyper-Text Transfer Protocol)-Protokoll bei Bedarf die gewünschten Betriebsfunktionen des Senders abzufragen. Gleichzeitig werden über die zusätzlich noch vorgesehene Rückmelde-Netzverbindung, die beispielsweise nach dem SNMP (Simple Network Management Protocol)-Protokoll arbeitet oder die dazu eine zusätzliche nach dem HTTP-Protokoll arbeitende Client/Server-Rückverbindung aufweist, automatisch und unaufgefordert ständig bestimmte Betriebsfunktionen des Senders zur Zentrale übertragen, so daß eventuelle Fehlfunktionen des Senders sofort in der Zentrale erkannt und angezeigt werden und dann unmittelbar über die bestehende Fernsteuer-verbindung (Browser/Server der HTTP-Verbindung bzw. bei Benutzung einer SNMP-Verbindung als Rückmelde-Netzverbindung unmittelbar durch diese) behoben werden können. Der Browser zur bedarfsweisen Abfrage der Betriebsbedingungen kann auch dezentral benutzt werden, indem er beispielsweise dem Wartungspersonal zugeordnet ist, das mobil unterwegs ist und bei eventuellen Störfällen über die Zentrale entsprechend informiert wird.

Das erfindungsgemäße System kann bei beliebigen Funksendern angewendet werden, sowohl bei Rundfunksendern als auch bei Mobilfunksendern, dabei können nicht nur die Betriebsfunktionen des Senders abgefragt und ferngesteuert werden, sondern beispielsweise auch entsprechende Meßgeräte, die der Senderanlage zugeordnet sind und die ebenfalls über die Fernsteuereinrichtung des Senders abfragbar und fernsteuerbar sind. Auch für andere fernsteuerbare Einrichtungen, bei denen ähnliche Anforderungen wie bei solchen Funksendern bestehen, kann das erfindungsgemäße System in analoger Weise angewendet werden.

Die Erfindung wird im folgenden anhand schematischer Zeichnungen an zwei Ausführungsbeispielen näher erläutert.

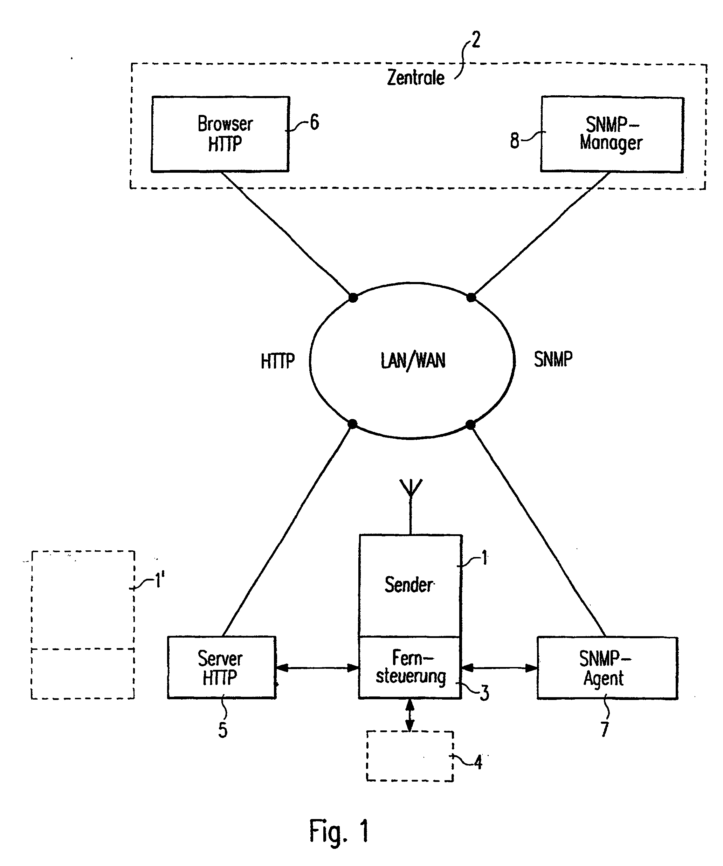

Fig. 1 zeigt das Prinzipschaltbild eines erfindungsgemäßen Betriebssystems für unbemannte Sender, von denen der Übersichtlichkeit halber nur ein einziger Sender 1 dargestellt ist. In gleicher Weise können von einer Zentrale 2 aus natürlich eine Vielzahl solcher Sender nach dem erfindungsgemäßen Prinzip ferngesteuert werden, wie dies mit dem Sender 1' angedeutet ist. Der Sender 1 ist über eine Fernsteuereinrichtung 3 in an sich bekannter Weise fernsteuerbar, d.h. seine Betriebsfunktionen und eventuell ihm zugeordnete Meßgeräte 4 können über diese Fernsteuereinrichtung 3 ständig überwacht und bei Bedarf von der Zentrale 2 aus ferngesteuert werden, wie dies beispielsweise in der eingangs erwähnten Literatur DIN IEC 864 näher beschrieben ist. Die Fernsteuereinrichtung 3 ist über ein öffentliches Netz LAN/WAN mit der Zentrale 2 verbunden und zwar über eine nach dem HTTP-Protokoll arbeitendes Netz mit einem Server 5, der mit der Fernsteuereinrichtung 3 verbunden ist, und einem Browser 6, der in der Zentrale 2 angeordnet ist oder gegebenenfalls auch dezentral aufgestellt ist. Der Server 5 ist vorzugsweise mit der Fernsteuereinrichtung 3 zu einer Einheit integriert (embedded). Die Betriebsbedingungen des Senders 1 sind in einem nicht näher dargestellten Speicher als Webseiten (web pages) nach dem XML-Standard abgespeichert und können über den Server 5 entsprechend ausgelesen und über ein geeignetes Netzwerk-Interface in das öffentliche Netz LAN/WAN eingespeist und nach dem HTTP-Protokoll zum Browser 6 übertragen und dort beispielsweise auf einem Bildschirm dargestellt werden, sobald der Browser über das Netzwerk an den Server 5 einen entsprechenden HTTP-Abfragebefehl sendet. Dieses nach dem HTTP-System arbeitende Abfrage- und Steuersystem ist beispielsweise näher beschrieben in dem "Request for Comments" RFC 2026, RFC 2616. Gleichzeitig ist die Fernsteuerung 3 auch noch nach dem SNMP-Protokoll über das öffentliche Netz LAN/WAN mit der Zentrale 2 verbunden, wie es z. B. im RFC 1089 und RFC 1067 näher beschrieben ist. Dazu ist der Fernsteuerung 3 ein SNMP-Agent 7 zugeordnet, der vorzugsweise wieder wie der Server 5 unmittelbar mit der Fernsteuerung 3 integriert ist. Dieser SNMP-Agent 7 steht über das öffentliche Netz mit einem in der Zentrale 2 angeordneten SNMP-Manager 8 in Verbindung. Über diese zweite ständig wirksame SNMP-Verbindung können die Betriebsfunktionen des Senders 1, deren Befehlsumfang in der "Management Information Base" definiert ist, ständig zur Zentrale übertragen und in der Zentrale kann daher die Funktion des Senders ständig überwacht werden. In manchen Fällen genügt es oftmals, keine ständige Übertragung von Betriebsfunktionen zur Zentrale vorzusehen sondern nur dann, wenn störende Abweichungen dieser Betriebsfunktionen im Sender auftreten. Diese werden dann unaufgefordert durch die sogenannten SNMP-Traps an die Zentrale gemeldet. Über dieses SNMP-Protokoll kann auch vom SNMP-Manager aus der Zentrale unmittelbar auf die Fernsteuereinrichtung 3 eingewirkt und damit die Betriebsfunktion des Senders ferngesteuert werden.

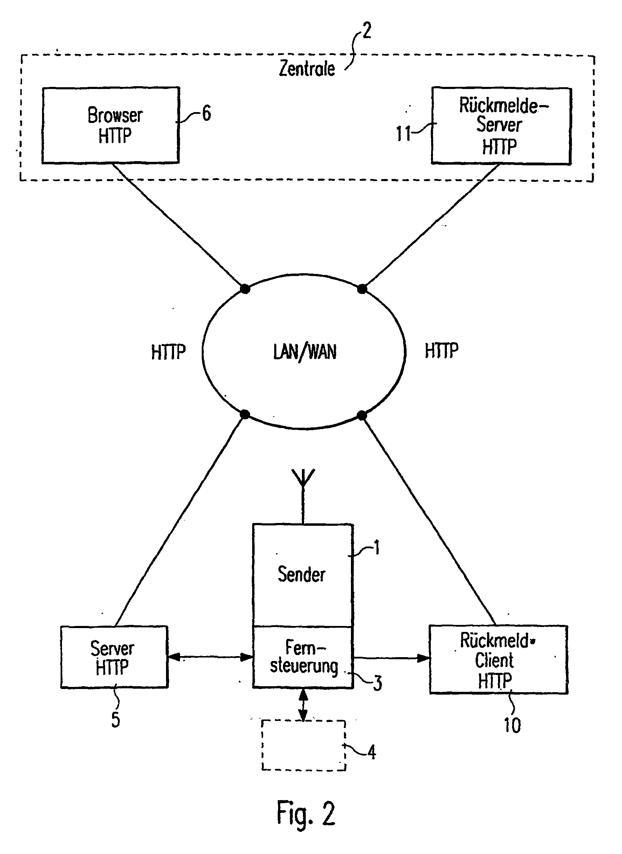

Fig. 2 zeigt eine weitere Möglichkeit für die Ausbildung der Rückmelde-Netzverbindung. Das System zur bedarfsweisen Abfrage der Betriebsbedingungen über HTTP mit Server 5 und Browser 6 ist wie gemäß Fig. 1. Anstelle des SNMP-Systems für die ständige Rückmeldung wird gemäß Fig. 2 ebenfalls das HTTP-Protokoll benutzt. Dazu wird der Fernsteuereinrichtung 3 ein Rückmelde-Client 10 zugeordnet, vorzugsweise wieder mit der Fernsteuereinrichtung und dem Server 5 integriert, der über das Netz LAN/WAN mit einem Rückmelde-Server 11 in der Zentrale verbunden ist. Wenn im Sender beispielsweise eine Störung einer Betriebsfunktion auftritt oder gegebenenfalls auch zeitlich periodisch in bestimmten Abständen, wählt der Rückmelde-Client 10 nach dem HTTP-Protokoll die dem Rückmelde-Server 11 zugehörige IP-Adresse (Identifikationsnummer) und überträgt dann automatisch und selbständig unaufgefordert die jeweiligen Betriebsfunktionen des Senders 1, die dem Rückmelde-Client 10 über die Fernsteuereinrichtung 3 zugeführt werden, zum Rückmelde-Server 11 und werden dort ausgewertet und lösen dort beispielsweise einen optischen oder akustischen Alarm aus, so daß dann die Zentrale über die Browser/Server-Verbindung 6, 5 entweder nähere Informationen über die Betriebsstörung abfragen kann und dann unmittelbar auf die Betriebsfunktionen durch Fernsteuerung einwirken kann, um eventuelle Unregelmäßigkeiten oder Störungen der Betriebsfunktionen zu beheben.

Die über das öffentliche Netz zu übertragenden Protokolle können in bekannter Weise verschlüsselt werden, um Fremdeinwirkungen auszuschließen.

Die nach dem HTTP-Protokoll arbeitende Server/Browser-Verbindung ist von bekannter Art. Geeignet hierfür ist beispielsweise der von der Firma MICROSOFT angebotene Internetexplorer oder der von der Firma NETSCAPE angebotene Navigator. Als SNMP-System ist beispielsweise das von der Firma HEWLETT PACKARD angebotene System HP Open View, das System von Spectrum oder das System von MG Soft geeignet.

## Patentansprüche

1. System zur Fernbedienung und Fernüberwachung von unbemannten Funksendern (1), die jeweils Fernsteuereinrichtungen (3) aufweisen, über welche die Betriebsfunktionen des Senders ständig überwacht und bei Bedarf von einer Zentrale (2) aus fernsteuerbar sind,
**dadurch gekennzeichnet,**
**daß** die Zentrale (2) mit den fernsteuerbaren Sendern (1) über ein öffentliches oder privates Netzwerk (LAN/WAN) verbunden ist und zwar
über eine erste Standard-Web-Browser/Server-Verbindung (6, 5) mit einem Internet-Browser (6) in der Zentrale (2) und einem Internet-Server (5) im Sender (1), über welche die Betriebsfunktionen des Senders (1) nach dem HTTP-Protokoll abfragbar und fernsteuerbar sind,
und über eine zweite Rückmelde-Verbindung,
die entweder nach dem SNMP-Protokoll arbeitet und deren SNMP-Agent (7) mit der Fernsteuereinrichtung (3) des Senders verbunden ist und deren SNMP-Manager (8) in der Zentrale (2) angeordnet ist
oder
die als Standard-Client/Server-HTTP-Verbindung ausgebildet ist und deren Internet-Client (10) der Fernsteuereinrichtung (3) des Senders (1) zugeordnet ist und deren Internet-Server (11) in der Zentrale (2) angeordnet ist,
wobei über diese zweite Rückmelde-Verbindung die Betriebsfunktionen des Senders (1) automatisch und unaufgefordert vom Sender (1) zur Zentrale (2) übertragen werden.

2. System nach Anspruch 1,
**dadurch gekennzeichnet,**
**daß** im Internet-Server (5) der ersten Verbindung (6, 5) auf einer Web-Seite die jeweiligen Betriebsfunktionen des Senders (1) nach dem XML-Standard gespeichert sind und nach dem HTTP-Protokoll vom Internet-Browser (6) abfragbar und darstellbar sind.

3. System nach Anspruch 1 oder 2,
**dadurch gekennzeichnet,**
**daß** die Betriebsfunktionen des Senders (1) auch über die zweite nach dem SNMP-Protokoll arbeitende Standard-Agent/Manager-Verbindung (7, 8) fernsteuerbar sind.

4. System nach einem der vorhergehenden Ansprüche,
**dadurch gekennezeichnet,**
daß der Internet-Server (5) der ersten Verbindung und/oder der SNMP-Agent (7) bzw. der Internet-Client (10) der zweiten Verbindung mit der Fernsteuereinrichtung (3) des Senders (1) zu einer Einheit integriert sind.

5. System nach einem der vorhergehenden Ansprüche,
**dadurch gekennzeichnet,**
**daß** die Datenübertragung über das öffentliche Netz verschlüsselt erfolgt.

6. System nach einem der vorhergehenden Ansprüche,
**dadurch gekennzeichnet,**
**daß** die Datenübertragung vom Internet-Server (5) zu einem Anwender-Internet-Client drahtlos über das WAP-Protokoll erfolgt.

7. System nach einem der vorhergehenden Ansprüche,
**dadurch gekennzeichnet,**
**daß** der Internet-Browser (6) der ersten Verbindung dezentral benutzt wird.

8. System nach einem der vorhergehenden Ansprüche,
**dadurch gekennzeichnet,**
**daß** die Betriebsfunktionen des Senders (1) über die zweite Rückmelde-Verbindung nur bei störenden Abweichungen dieser Betriebsfunktionen zur Zentrale (2) übertragen werden.

## Claims

1. System for the remote operation and remote monitoring of unmanned radio transmitters (1), each of which comprises remote-control devices (3), by means of which the operating functions of the transmitter can be monitored constantly and, if required, remotely controlled from a central unit (2),
**characterised in that**
the central unit (2) is connected to the remotely controllable transmitters (1) via a public or private network (LAN/WAN) and, in particular, via a first standard web browser/server connection (6, 5) with an internet browser (6) in the central unit (2) and an internet server (5) in the transmitter (1), by means of which the operating functions of the transmitter (1) can be scanned and remotely controlled using the HTTP protocol,
and via a second check-back connection,
which operates either according to the SNMP protocol, the SNMP agent (7) being connected to the remote-control device (3) of the transmitter, and the SNMP manager (8) being arranged in the central unit
or
which is realised as a standard client/server HTTP connection, the internet client (10) being allocated to the remote-control device (3) of the transmitter (1), and the internet server (11) being arranged in the central unit (2),
wherein the operating functions of the transmitter (1) are transferred automatically and without prompting to the central unit (2) from the transmitter (1) via this second check-back connection.

2. System according to claim 1,
**characterised in that**
the relevant operating functions of the transmitter (1) are stored in the internet server (5) of the first connection (6, 5), on a web page using the XML standard and can be scanned and displayed by the internet browser (6) using the HTTP protocol.

3. System according to claim 1 or 2,
**characterised in that**
the operating functions of the transmitter (1) can also be remotely controlled via the second standard agent/manager connection (7, 8) operating according to the SNMP protocol.

4. System according to any one of the preceding claims,
**characterised in that**
the internet server (5) of the first connection and/or the SNMP agent (7) or respectively the internet client (10) of the second connection are integrated with the remote-control device (3) of the transmitter (1) to form a unit.

5. System according to any one of the preceding claims, **characterised in that**
the data is transferred in an encoded manner via the public network.

6. System according to any one of the preceding claims, **characterised in that**
the data is transferred from the internet server (5) to a user internet client in a wireless manner via the WAP protocol.

7. System according to any one of the preceding claims,
**characterised in that**
the internet browser (6) of the first connection is used in a decentralised manner.

8. System according to any one of the preceding claims,
**characterised in that**
the operating functions of the transmitter (1) are transferred to the central unit (2) via the second check-back connection only in the event of interfering deviations of these operating functions.

## Revendications

1. Système de télécommande et télésurveillance d'émetteurs radio (1) sans personnel de service, qui comportent chacun des dispositifs de télécommande (3), par l'intermédiaire desquels le fonctionnement de l'émetteur est surveillé en permanence et qui, en cas de besoin, peuvent être télécommandés à partir d'une centrale (2), **caractérisé en ce que**
la centrale (2) est reliée par l'intermédiaire d'un réseau public ou privé (LAN/WAN) aux émetteurs (1) à télécommander, à savoir
par l'intermédiaire d'une première liaison web standard navigateur/serveur (6, 5) avec un navigateur Internet (6) dans la centrale (2) et un serveur Internet (5) dans l'émetteur (1), par l'intermédiaire desquels le fonctionnement de l'émetteur (1) peut être exploré et télécommandé,
et par l'intermédiaire d'une deuxième liaison de réponse
qui travaille selon le protocole SNMP et dont l'agent SNMP (7) est relié au dispositif de télécommande (3) de l'émetteur et dont le gestionnaire SNMP (8) est agencé dans la centrale (2),
ou qui est conçue sous forme de liaison standard HTTP client/serveur et dont le client Internet (10) est associé au dispositif de télécommande (3) de l'émetteur (1) et dont le serveur Internet (11) est agencé dans la centrale (2),
les conditions de fonctionnement de l'émetteur (1) étant, automatiquement et spontanément, transmises de l'émetteur (1) vers la centrale (2) par l'intermédiaire de la deuxième liaison de réponse.

2. Système selon la revendication 1, **caractérisé en ce que**, dans le serveur Internet (5) de la première liaison (6, 5), les conditions de fonctionnement respectives de l'émetteur (1) sont stockées selon le standard XML sur une page web et peuvent être explorées et affichées selon le protocole HTTP par le navigateur Internet (6).

3. Système selon la revendication 1 ou 2, **caractérisé en ce que** les conditions de fonctionnement de l'émetteur (1) peuvent aussi être télécommandées par l'intermédiaire de la deuxième liaison standard agent/gestionnaire (7, 8), travaillant selon le protocole SNMP.

4. Système selon l'une quelconque des revendications précédentes, **caractérisé en ce que** le serveur Internet (5) de la première liaison et/ou l'agent SNMP (7) ou le client Internet (10) de la deuxième liaison sont intégrés dans le dispositif de télécommande (3) de l'émetteur (1) pour former une unité.

5. Système selon l'une quelconque des revendications précédentes, **caractérisé en ce que** la transmission des données est effectuée sous forme cryptée par l'intermédiaire du réseau public.

6. Système selon l'une quelconque des revendications précédentes, **caractérisé en ce que** la transmission des données, à partir du serveur Internet (5) vers le client Internet utilisateur, est effectuée sans fil par l'intermédiaire du protocole WAP.

7. Système selon l'une quelconque des revendications précédentes, **caractérisé en ce que** le navigateur Internet (6) de la première liaison est utilisé de manière décentralisée.

8. Système selon l'une quelconque des revendications précédentes, **caractérisé en ce que** les conditions de fonctionnement de l'émetteur (1) sont transmises vers la centrale (2) par l'intermédiaire de la deuxième liaison de réponse uniquement en cas de divergences entraînant des pannes.
